# EUROPEAN PATENT APPLICATION

(11) **EP 4 711 707 A1**
(43) Date of publication of application: **18.03.2026**
(21) Application number: 24822502.1
(22) Date of filing: 22.05.2024
(51) Int. Cl.: G01B 11/00, G06T 7/00, G06T 7/73, G06T 17/00

(54) **HOLE SITE INFORMATION DETECTION METHOD AND APPARATUS, AND DEVICE AND STORAGE MEDIUM**

(30) Priority: 16.06.2023 CN 202310715458
(71) Applicant: Shining 3D Tech Co., Ltd., Hangzhou, Zhejiang 311258 (CN)
(72) Inventor: WANG, Wenbin, Hangzhou, Zhejiang 311258 (CN); ZHAO, Xiaobo, Hangzhou, Zhejiang 311258 (CN); LI, Zhouqiang, Hangzhou, Zhejiang 311258 (CN); LI, Renju, Hangzhou, Zhejiang 311258 (CN)
(74) Representative: Manitz Finsterwald Patent- und Rechtsanwaltspartnerschaft mbB
(86) International application number: PCT/CN2024/094668
(87) International publication number: WO 2024/255550

(57) **Abstract**

The present disclosure relates to a method for detecting hole position information, apparatus, device, and storage medium. During scanning a structure to be detected using a three-dimensional scanner, first scan data and second scan data of the structure to be detected are acquired, wherein the first scan data is photometric stereo scan data of positioning holes on the structure to be detected; the second scan data includes non-photometric stereo scan data of the positioning holes, or the second scan data is non-photometric stereo scan data of feature points other than the positioning holes. The hole position information of the positioning holes is determined based on the first scan data and the second scan data. The photometric stereo scan data is obtained through detection in a photometric stereo scanning mode, which may include subtle changes on the surface of an object and has the effects of enhancing the contrast between different feature points and reducing noise. Therefore, by using the photometric stereo scan data and non-photometric stereo scan data, hole position information with higher accuracy may be determined, meeting the requirements of high-precision industrial automation detection.

## Description

### APPARATUS, DEVICE AND STORAGE MEDIUM

The present disclosure claims priority to the Chinese patent application No. 202310715458.4 filed in the China National Intellectual Property Administration on June 16, 2023, with the invention title "method for detecting hole position information, Apparatus, Device, and Storage Medium", which is incorporated by reference in its entirety.

### TECHNICAL FIELD

Embodiments of the present disclosure relate to the technical field of industrial automation detection, and in particular, to a method for detecting hole position information, apparatus, device, and storage medium.

### BACKGROUND

In industrial automation detection, in addition to detecting the surface profile information of structures, it is even more import to detect the hole position information of structures, for example, detecting the center position and diameter of positioning holes.

There may be two main methods for detecting hole position information in the related technology. Method 1: Extracting hole position information directly from the two-dimensional images scanned by a three-dimensional scanner, then obtaining three-dimensional reconstruction data by performing three-dimensional reconstruction on the hole position information, and determining the three-dimensional reconstruction data as the hole position information of the positioning holes. Method 2: collecting three-dimensional data of the structure to be detected using a non-photometric stereo scanning method, then perform edge extraction and searching on the three-dimensional data, and fitting the hole position information. However, Method 1 is greatly affected by factors, such as the thickness and color of the positioning holes, while Method 2 is prone to edge noise and burrs. Therefore, the accuracy of the above-mentioned method for detecting hole position informations is relatively low, making it difficult to meet the requirements of high-precision industrial automated inspection.

### SUMMARY

### (I) Technical Problem

In order to solve the above-mentioned technical problem or at least partially solve the above-mentioned technical problem, the present disclosure provides a method for detecting hole position information, apparatus, device, and storage medium.

### (II) Technical Solution

Embodiments of the present disclosure provides a method for detecting hole position information. The method includes:
during scanning a structure to be detected using a three-dimensional scanner, acquiring first scan data and second scan data of the structure to be detected, wherein the first scan data is photometric stereo scan data of positioning holes on the structure to be detected, and the second scan data includes non-photometric stereo scan data of the positioning holes, or the second scan data is non-photometric stereo scan data of feature points other than the positioning holes;
determining the hole position information of the positioning holes based on the first scan data and the second scan data.

Embodiments of the present disclosure also provide an apparatus for detecting hole position information, the device includes:
a data acquisition module, configured to acquire first scan data and second scan data of a structure to be detected during scanning the structure to be detected by using a three-dimensional scanner, wherein the first scan data is photometric stereo scan data of positioning holes on the structure to be detected, and the second scan data includes non-photometric stereo scan data of the positioning holes, or the second scan data is non-photometric stereo scan data of feature points other than the positioning holes;
a hole position detection module, configured to determine the hole position information of the positioning holes based on the first scan data and the second scan data.

Embodiments of the present disclosure also provide an electronic device, the device includes:
one or more processors;
a memory, configured to store one or more programs;
when the one or more programs are executed by the one or more processors, the one or more processors are enabled to perform the method for detecting hole position information provided in the first aspect.

Embodiments of the present disclosure also provide a computer-readable storage medium, the storage medium stores a computer program, and the computer program is used to execute the method for detecting hole position information provided in the embodiments of the present disclosure.

### (III) Beneficial Effects

Compared with the existing technology, the above-mentioned technical solution provided by the embodiments of the present disclosure has the following advantages:
The method for detecting hole position information, apparatus, device, and storage medium provided by the embodiments of the present disclosure may acquire first scan data and second scan data of a structure to be detected during scanning the structure to be detected using a three-dimensional scanner, wherein the first scan data is photometric stereo scan data of positioning holes on the structure to be detected; the second scan data includes non-photometric stereo scan data of the positioning holes, or the second scan data is non-photometric stereo scan data of feature points other than the positioning holes. The hole position information of the positioning holes may be determined based on the first scan data and the second scan data. The photometric stereo scan data is obtained through detection in a photometric stereo scanning mode, which can include subtle changes on the surface of an object and has the effects of enhancing the contrast between different feature points and reducing noise. Therefore, by using the photometric stereo scan data and non-photometric stereo scan data, hole position information with higher accuracy may be obtained, ultimately meeting the requirements of high-precision industrial automation detection.

It should be understood that the above general description and the following detailed description are merely exemplary and explanatory, and may not limit the present disclosure.

### BRIEF DESCRIPTION OF THE DRAWINGS

The accompanying drawings are incorporated into and constitute a part of the specification, illustrate embodiments consistent with the present disclosure, and together with the specification serve to explain the principles of the present disclosure.

In order to more clearly illustrate the technical solutions in the embodiments of the present disclosure or the prior art, the following provides a brief introduction to the drawings required for describing the embodiments or the prior art. It is obvious that, for those skilled in the art, other drawings may be derived from these drawings without requiring creative labor.
FIG. 1 is a schematic flowchart of a method for detecting hole position information according to one or more embodiments of the present disclosure;
FIG. 2 is a schematic diagram of a three-dimensional scanner according to one or more embodiments of the present disclosure;
FIG. 3 is a schematic flowchart of another method for detecting hole position information according to one or more embodiments of the present disclosure;
FIG. 4 is a schematic logical diagram of a method for detecting hole position information according to one or more embodiments of the present disclosure;
FIG. 5 is a schematic structural diagram of an apparatus for detecting hole position information according to one or more embodiments of the present disclosure;
FIG. 6 is a schematic structural diagram of an electronic device according to one or more embodiments of the present disclosure.

### DETAILED DESCRIPTION

In order to make the objectives, technical solutions, and advantages of the embodiments of the present disclosure clearer, the following provides a clear and complete description of the technical solutions in the embodiments of the present disclosure. Obviously, the described embodiments are part of the embodiments of the present disclosure, rather than all the embodiments. Based on the embodiments in the present disclosure, all other embodiments obtained by those of ordinary skill in the art without making creative efforts shall fall within the protection scope of the present disclosure.

In order to improve the accuracy of hole position information detection, the embodiments of the present disclosure provide a method for detecting hole position information, apparatus, device, and storage medium.

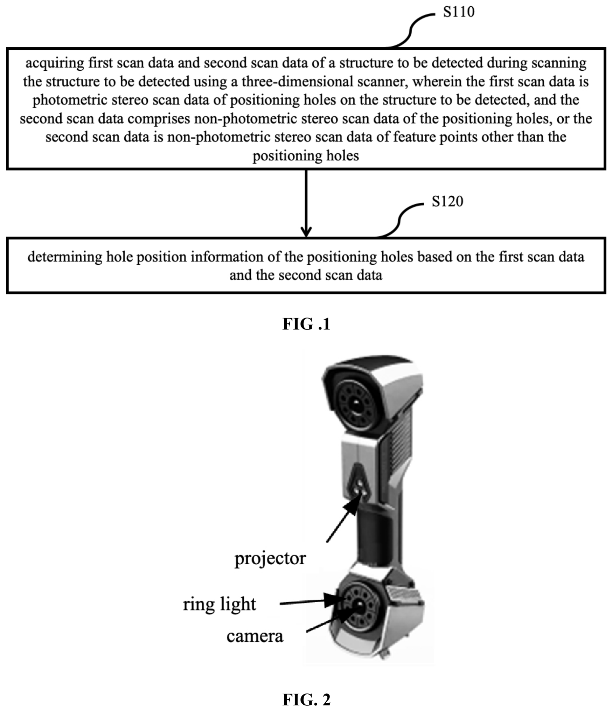

The method for detecting hole position information provided by the embodiments of the present disclosure will be described below with reference to FIGS. 1 to 4. In the embodiments of the present disclosure, the method for detecting hole position information may be executed by an electronic device. The electronic device may include devices with communication functions, for example, tablet computers, desktop computers, and notebook computers. The electronic device may also include devices simulated by virtual machines or simulators.

FIG. 1 illustrates a flowchart of a method for detecting hole position information provided by embodiments of the present disclosure.

As shown in FIG. 1, the method for detecting hole position information may include the following steps.

S110: During scanning a structure to be detected using a three-dimensional scanner, acquiring first scan data and second scan data of the structure to be detected. The first scan data includes photometric stereoscopic scan data of positioning holes on the structure to be detected, the second scan data includes non-photometric stereoscopic scan data of the positioning holes, or the second scan data includes non-photometric stereoscopic scan data of feature points other than the positioning holes.

In the present embodiment, when it is required to perform hole position detection on the structure to be detected, the electronic device first imports geometric information of the structure to be detected, wherein the geometric information includes identification information of the positioning holes of the structure to be detected. Subsequently, the electronic device controls robotic arms to drive the three-dimensional scanner along a planned path to perform surface scanning of the structure to be detected. Based on that a positioning hole is detected, the three-dimensional scanner is switched to photometric stereoscopic scanning mode to acquire photometric stereoscopic scan data of the positioning hole as the first scan data.

In order to improve the accuracy of hole position information, the present embodiment may need to determine the hole position information of positioning holes by combining different types of scan data. In one case, during performing surface scanning of the structure to be detected by the three-dimensional scanner, it may collect non-photometric stereo scan data of feature points other than the positioning holes as the second scan data using a non-photometric stereo scanning mode. By further combining the first scan data and the second scan data, the hole position information of the positioning holes may be accurately determined. In another case, when the positioning holes of the structure to be detected is detected by the three-dimensional scanner, the three-dimensional scanner may be controlled to enter both the photometric stereo scanning mode and the non-photometric stereo scanning mode simultaneously, which may enable the three-dimensional scanner to collect the photometric stereo scan data of the positioning holes in the photometric stereo scanning mode as the first scan data and collect the non-photometric stereo scan data of the positioning holes in the non-photometric stereo scanning mode as the second scan data. By further combining the first scan data and the second scan data, the hole position information of the positioning holes may be accurately determined.

It should be understood that, to enable the three-dimensional scanner to scan the positioning holes in a favorable posture, when the electronic device detects the positioning holes of the structure to be detected, it may control the three-dimensional scanner to collect the first scan data and the second scan data in a target scanning posture based on pre-determined movement information. Specifically, the movement information may include a movement direction and a movement distance. The three-dimensional scanner is moved based on the movement direction to enable optical axis of the photometric camera coinciding with the normal direction of the positioning holes. The movement distance refers to optimal distance to be adjusted, which may be determined based on user experience.

In some embodiments, the photometric stereo scanning mode may be understood as a scanning mode that estimates surface geometry using a plurality of light source directions, which can collect detailed data of the structure to be detected. In order to enable the three-dimensional scanner to collect photometric stereo scan data of the positioning holes in the photometric stereo scanning mode, lens of the camera on the three-dimensional scanner is surrounded by a plurality of ring lights. The ring lights may be sequentially turned on according to a preset lighting sequence and a preset interval time to enable the three-dimensional scanner scanning the positioning holes on the structure to be detected in the photometric stereo scanning mode. In other words, the three-dimensional scanner may be enabled to obtain the photometric stereo scan data of the positioning holes by estimating the geometry of the surface of the structure to be detected using a plurality of light sources.

Alternatively, the three-dimensional scanner may include a monocular camera, a binocular camera, or a multi-camera system. Further, if the three-dimensional scanner is a binocular camera or a multi-camera system, the binocular camera or multi-camera system may be a coaxial camera.

Alternatively, the number of ring lights arranged around the lens of the camera on the three-dimensional scanner may be 8 or another number, and there is no specific limitation in this regard.

To facilitate understanding of the scanning process of the three-dimensional scanner, an example explanation is provided with reference to the schematic diagram of the three-dimensional scanner shown in FIG. 2. As shown in FIG. 2, the three-dimensional scanner includes a projector and two coaxial cameras. During the scanning process of the three-dimensional scanner, the projector may project patterns onto the structure to be detected by means including but not limited to laser or structured light. The two cameras may capture images of the patterns and images of the structure to be detected. The three-dimensional scanner may then determine the first scan data and the second scan data based on the images of the patterns and the images of the structure to be detected. It should be noted that each ring light arranged around the lens of the camera on the three-dimensional scanner and the lens of the camera are unobstructed; when any one of the plurality of ring lights is turned on, the brightness of the lit ring light is greater than or equal to a preset brightness threshold, and the wavelength of the light emitted by the lit ring light is equal to the wavelength of the optical filter in front of the lens of the camera.

Through the above method, first, since neither the lens nor the ring lights are obstructed, the propagation of light may not be affected, thereby improving the image acquisition effect of the camera. Second, because the brightness of the lit ring light is sufficiently high, it may shield against interference from ambient light in the environment. Furthermore, since the wavelength of the light emitted by the lit ring light is equal to the wavelength of the optical filter in front of the lens of the camera, the wavelength of the ring light may match the wavelength of the optical filter in front of the lens of the camera, thereby eliminating interference from ambient light, and purifying the images captured by the camera.

S120: Determining the hole position information of the positioning hole based on the first scan data and the second scan data.

In the present embodiment, after obtaining the first scan data and the second scan data, the electronic device may determine the hole position information of the positioning hole by a correction method or a stitching method.

The first scan data and the second scan data are scan data under the camera coordinate system. In specific calculations, first, based on the conversion relationship between the camera coordinate system and the scanner coordinate system, the first scan data and the second scan data may be converted from the camera coordinate system to the scanner coordinate system. Then, the hole position information of the positioning hole may be obtained by processing the first scan data and the second scan data under the scanner coordinate system.

The method for detecting hole position information according to an embodiment of the present disclosure includes: during scanning the structure to be detected by the three-dimensional scanner, acquiring first scan data and second scan data of the structure to be detected, wherein the first scan data is photometric stereo scan data of positioning holes on the structure to be detected, and the second scan data includes non-photometric stereo scan data of the positioning holes, or the second scan data is non-photometric stereo scan data of feature points other than the positioning holes; determining the hole position information of the positioning holes based on the first scan data and the second scan data. The photometric stereo scan data is obtained by detection in the photometric stereo scanning mode, which may include subtle changes on the surface of an object, and have the effects of enhancing the contrast between different feature points and reducing noise. Therefore, based on the photometric stereo scan data and non-photometric stereo scan data, hole position information with higher accuracy may be obtained, ultimately meeting the requirements of high-precision industrial automation detection.

In another implementation of the present disclosure, a different method may be used to determine the hole position information of the positioning holes for different types of second scan data.

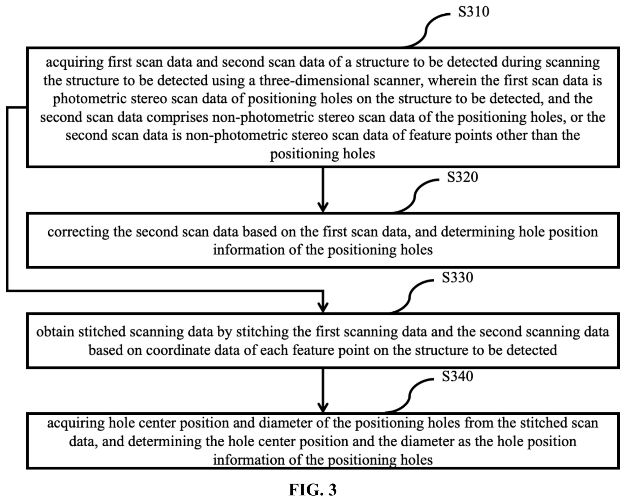

FIG. 3 shows a schematic flowchart of another method for detecting hole position information provided by an embodiment of the present disclosure.

As shown in FIG. 3, the method for detecting hole position information may include the following steps.

S310: During scanning a structure to be detected using a three-dimensional scanner, acquiring first scan data and second scan data of the structure to be detected wherein the first scan data is photometric stereo scan data of positioning holes on the structure to be detected; the second scan data includes non-photometric stereo scan data of the positioning holes, or the second scan data is non-photometric stereo scan data of feature points other than the positioning holes.

S310 is similar to S110, and will not be repeated here.

S320: Correcting the second scan data based on the first scan data, and determining the hole position information of the positioning holes.

In the present embodiment, the second scan data is non-photometric stereo scan data of the positioning holes; in other words, the first scan data and the second scan data include scan data of the same positioning hole obtained under two scanning modes.

Specifically, step S320 includes the following steps: acquiring first scan data and second scan data corresponding to any current feature point on the positioning hole; based on the first scan data corresponding to the current feature point, removing abnormal data from the second scan data corresponding to the current feature point, until abnormal data in the second scan data corresponding to all feature point on the positioning holes are removed, thereby obtaining second scan data with all abnormal data removed; acquiring hole center position and diameter of the positioning hole from the second scan data with all abnormal data removed, and determining the hole center position and diameter as the hole position information of the positioning hole.

The current feature point refers to any feature point on the positioning hole.

Specifically, starting from the current feature point, abnormal data of the second scan data corresponding to the current feature point is removed based on the first scan data of the current feature point. Then, moving clockwise or counterclockwise, abnormal data of the second scan data corresponding to the next feature point is removed based on the first scan data of the next feature point. The process is repeated until all abnormal data of the second scan data corresponding to all feature points on the positioning hole are removed, thereby obtaining the second scan data with all abnormal data removed. Finally, the hole center position and diameter of the positioning hole are directly obtained from the second scan data with all abnormal data removed, thereby acquiring the hole position information of the positioning hole.

Thus, the first scan data, which includes detailed information of the positioning hole, is used to correct the second scan data, thus obtaining the second scan data with all abnormal data removed. Since the second scan data with all abnormal data removed has high accuracy, hole position information with higher accuracy may also be obtained based on the second scan data with all abnormal data removed.

S330: Stitching the first scan data and the second scan data based on the coordinate data of each feature point on the structure to be detected to obtain stitched scan data.

In the present embodiment, the second scan data is non-photometric stereo scan data of feature points other than the positioning holes.

It should be understood that the coordinate data of each feature point on the structure to be detected includes the coordinate data of the feature points on the positioning holes and the coordinate data of the feature points adjacent to the feature points on the positioning holes. Therefore, by stitching the first scan data and the second scan data based on the coordinate data of the feature points on the positioning holes and the coordinate data of the feature points adjacent to the feature points on the positioning holes, the stitched scan data may be obtained, i.e., the scan data of the structure to be detected may be obtained.

S340: Acquiring the hole center position and diameter of the positioning hole from the stitched scan data, and determining the hole center position and diameter as the hole position information of the positioning hole.

In the present embodiment, first, the coordinate data of reference points on the structure to be detected and the scan data corresponding to the reference points are determined. Then, based on the coordinate data of the reference points and the scan data corresponding to the reference points, the hole center position and diameter of the positioning hole may be directly read from the stitched scan data, and may be determined as the hole position information of the positioning hole.

Thus, by stitching the first scan data and the second scan data, the scan data of the structure to be detected is determined, and then the hole position information is directly obtained based on the coordinate data and scan data corresponding to the reference points. In this way, by considering the coordinate data and scan data of entire structure to be detected, the accuracy of hole position information may be improved.

In yet another implementation of the present disclosure, the overall process of hole position information detection may be explained.

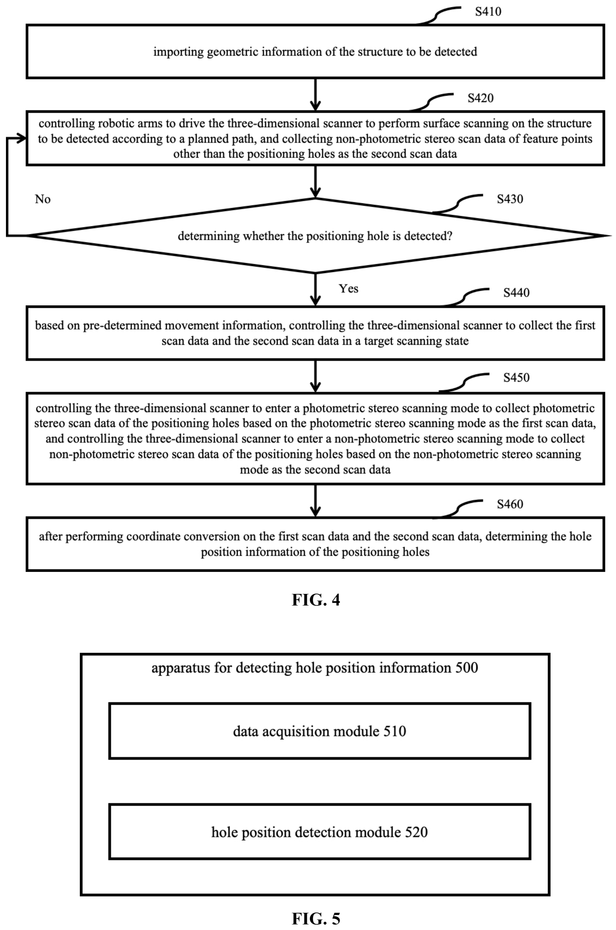

FIG. 4 shows a schematic logical diagram of a method for detecting hole position information provided by an embodiment of the present disclosure.

As shown in FIG. 4, the method for detecting hole position information may include the following steps.

S410: Importing geometric information of the structure to be detected.

The geometric information includes identification information of the positioning holes of the structure to be detected.

S420: Controlling robotic arms to drive the three-dimensional scanner to perform surface scanning on the structure to be detected according to a planned path, and collecting non-photometric stereo scan data of feature points other than the positioning holes as the second scan data.

S430: Determining whether the positioning hole is detected.

Specifically, if the positioning hole of the structure to be detected is detected, execute S440; otherwise, return to continue executing S420.

S440: Based on pre-determined movement information, controlling the three-dimensional scanner to collect the first scan data and the second scan data in a target scanning state.

The movement information includes a movement direction and a movement distance.

S450: Controlling the three-dimensional scanner to enter a photometric stereo scanning mode to collect photometric stereo scan data of the positioning holes based on the photometric stereo scanning mode as the first scan data, and controlling the three-dimensional scanner to enter a non-photometric stereo scanning mode to collect non-photometric stereo scan data of the positioning holes based on the non-photometric stereo scanning mode as the second scan data.

S460: After performing coordinate conversion on the first scan data and the second scan data, determining the hole position information of the positioning holes.

Specifically, based on the conversion relationship between the camera coordinate system and the scanner coordinate system, the first scan data and the second scan data are converted from the camera coordinate system to the scanner coordinate system. Then, under the scanner coordinate system, the second scan data may be corrected based on the first scan data to determine the hole position information of the positioning holes; or, under the scanner coordinate system, abnormal data of the second scan data are removed based on the first scan data, and the positioning information of the positioning holes may be obtained from the second scan data with all abnormal data removed.

Embodiments of the present disclosure also provide an apparatus for detecting hole position information for performing the aforementioned method for detecting hole position information, which may be described below with reference to FIG. 5. In the embodiments of the present disclosure, the apparatus for detecting hole position information may be an electronic device. The electronic device may include devices with communication functions, such as tablet computers, desktop computers, and notebook computers. The electronic device may also include devices simulated by virtual machines or simulators.

FIG. 5 shows a schematic structural diagram of an apparatus for detecting hole position information provided by embodiments of the present disclosure.

As shown in FIG. 5, the apparatus for detecting hole position information 500 may include:
a data acquisition module 510, configured to acquire first scan data and second scan data of a structure to be detected during scanning the structure to be detected using a three-dimensional scanner, wherein the first scan data is photometric stereo scan data of positioning holes on the structure to be detected, and the second scan data includes non-photometric stereo scan data of the positioning holes, or the second scan data is non-photometric stereo scan data of feature points other than the positioning holes;
a hole position detection module 520, configured to determine the hole position information of the positioning holes based on the first scan data and the second scan data.

The apparatus for detecting hole position information according to embodiments of the present disclosure may acquire the first scan data and the second scan data of the structure to be detected during scanning the structure to be detected using a three-dimensional scanner, wherein the first scan data is photometric stereo scan data of positioning holes on the structure to be detected; the second scan data includes non-photometric stereo scan data of the positioning holes, or the second scan data is non-photometric stereo scan data of feature points other than the positioning holes. The apparatus may determine the hole position information of the positioning holes based on the first scan data and the second scan data. The photometric stereo scan data may be obtained through detection in a photometric stereo scanning mode, which may include subtle changes on the surface of an object and have the effects of enhancing the contrast between different feature points and reducing noise. Therefore, based on the photometric stereo scan data and non-photometric stereo scan data, hole position information with higher accuracy may be obtained, ultimately meeting the requirements of high-precision industrial automation detection.

In some embodiments of the present disclosure, the apparatus further includes:
a control module, configured to, when the positioning holes of the structure to be detected is detected by the three-dimensional scanner, control the three-dimensional scanner to collect the first scan data and the second scan data in a target scanning state based on pre-determined movement information.

In some embodiments of the present disclosure, the second scan data is non-photometric stereo scan data of the positioning hole; the hole position detection module 520 includes:
a correction unit, configured to correct the second scan data based on the first scan data and determine the hole position information of the positioning hole.

In some embodiments of the present disclosure, the correction unit is specifically configured to:
acquire first scan data and second scan data corresponding to any current feature point on the positioning hole;
based on the first scan data corresponding to the current feature point, remove abnormal data of the second scan data corresponding to the current feature point until abnormal data of the second scan data corresponding to all feature point on the positioning hole are removed, thereby obtaining the second scan data with all abnormal data removed;
acquire the hole center position and diameter of the positioning hole from the second scan data with all abnormal data removed, and determine the hole center position and the diameter as the hole position information of the positioning hole.

In some embodiments of the present disclosure, the second scan data is non-photometric stereo scan data of feature points other than the positioning holes; the hole position detection module 520 includes:
a stitching unit, configured to obtain stitched scan data by stitching the first scan data and the second scan data based on the coordinate data of each feature point on the structure to be detected;
a hole position information acquisition unit, configured to acquire the hole center position and diameter of the positioning hole from the stitched scan data, and determine the hole center position and the diameter as the hole position information of the positioning hole.

In some embodiments of the present disclosure, lens of the camera on the three-dimensional scanner is surrounded by a plurality of ring lights; each ring light and the lens of the camera are unobstructed; when any one of the plurality of ring lights is turned on, the brightness of the lit ring light is greater than or equal to a preset brightness threshold, and the wavelength of the light emitted by the lit ring light is equal to the wavelength of the optical filter in front of the lens of the camera.

In some embodiments of the present disclosure, the plurality of ring lights are sequentially turned on according to a preset lighting sequence and a preset interval time to enable the three-dimensional scanner scanning the positioning holes on the structure to be detected in the photometric stereo scanning mode, and to obtain the photometric stereo scan data of the positioning holes.

It should be noted that the apparatus for detecting hole position information 500 shown in FIG. 5 may execute each step in the method embodiments shown in FIGS. 1 to 4, and realize each process and effect in the method embodiments shown in FIGS. 1 to 4, which will not be repeated here.

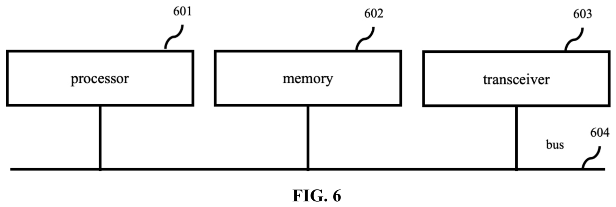

FIG. 6 shows a schematic structural diagram of an electronic device provided by an embodiment of the present disclosure.

As shown in FIG. 6, the electronic device may include a processor 601 and a memory 602 storing computer program instructions.

Specifically, the processor 601 may include a Central Processing Unit (CPU), an Application Specific Integrated Circuit (ASIC), or one or more integrated circuits configured to implement the embodiments of the present application.

The memory 602 may include a mass storage device for storing information or instructions. By way of example and not limitation, the memory 602 may include a Hard Disk Drive (HDD), a floppy disk drive, a flash memory, an optical disc, a magneto-optical disc, a magnetic tape, a Universal Serial Bus (USB) drive, or a combination of two or more of the above. Where appropriate, the memory 602 may include removable or non-removable (or fixed) media. In an appropriate situation, the memory 602 may be internal or external to the integrated gateway device. In certain embodiments, the memory 602 is a non-volatile solid-state memory. In certain embodiments, the memory 602 includes Read-Only Memory (ROM). In an appropriate situation, the ROM may be Mask-Programmed ROM (MROM), Programmable ROM (PROM), Erasable Programmable ROM (EPROM), Electrically Erasable Programmable ROM (EEPROM), Electrically Alterable ROM (EAROM), flash memory, or a combination of two or more of the above.

The processor 601 may read and execute the computer program instructions stored in the memory 602 to perform the steps of the method for detecting hole position information provided by the embodiments of the present disclosure.

In one example, the electronic device may further include a transceiver 603 and a bus 604. As shown in FIG. 6, the processor 601, the memory 602, and the transceiver 603 are connected through the bus 604 and complete communication with each other.

The bus 604 includes hardware, software, or both. By way of example and not limitation, the bus may include an Accelerated Graphics Port (AGP) or other graphics buses, an Extended Industry Standard Architecture (EISA) bus, a Front Side Bus (FSB), a Hyper Transport (HT) interconnect, an Industrial Standard Architecture (ISA) bus, an InfiniBand interconnect, a Low Pin Count (LPC) bus, a memory bus, a Micro Channel Architecture (MCA) bus, a Peripheral Component Interconnect (PCI) bus, a PCI-Express (PCI-X) bus, a Serial Advanced Technology Attachment (SATA) bus, a Video Electronics Standards Association Local Bus (VLB), or other suitable buses, or a combination of two or more of the above. In an appropriate situation, the bus 604 may include one or more buses. Although the embodiments of the present application describe and illustrate a specific bus, the present application contemplates any suitable bus or interconnect.

The following is an embodiment of a computer-readable storage medium provided by the embodiments of the present disclosure. The computer-readable storage medium and the method for detecting hole position information of the above embodiments belong to the same inventive concept. For details not fully described in the embodiment of the computer-readable storage medium, reference may be made to the embodiments of the above method for detecting hole position information.

The present embodiment provides a storage medium including computer executable instructions. When executed by a computer processor, the computer executable instructions are used to implement a method for detecting hole position information. The method includes:
During scanning a structure to be detected using a three-dimensional scanner, acquiring first scan data and second scan data of the structure to be detected, wherein the first scan data is photometric stereo scan data of positioning holes on the structure to be detected, and the second scan data includes non-photometric stereo scan data of the positioning holes, or the second scan data is non-photometric stereo scan data of feature points other than the positioning holes;
Determining the hole position information of the positioning holes based on the first scan data and the second scan data.

Certainly, the embodiments of the present disclosure provides a storage medium including computer-executable instructions. the computer-executable instructions are not limited to the method operations described above; the computer-executable instructions may also execute relevant operations in the method for detecting hole position information provided by any embodiment of the present disclosure.

From the above description of the implementation, those skilled in the art can clearly understand that the present disclosure may be implemented by means of software and necessary general-purpose hardware, and of course, can also be implemented by hardware. However, in many cases, the former is a better implementation. Based on the understanding, the technical solution of the present disclosure, in essence, or the part that contributes to the existing technology, can be embodied in the form of a software product. The computer software product can be stored in a computer-readable storage medium, such as a floppy disk of a computer, Read-Only Memory (ROM), Random Access Memory (RAM), FLASH memory, hard disk, or optical disc, and includes several instructions to enable a computer cloud platform (which may be a personal computer, a server, a network cloud platform, etc.) to execute the method for detecting hole position information provided by each embodiment of the present disclosure.

It should be noted that the above are only preferred embodiments of the present disclosure and the technical principles applied thereto. Those skilled in the art will understand that the present disclosure is not limited to the specific embodiments herein, and various obvious changes, readjustments, and substitutions can be made by those skilled in the art without departing from the protection scope of the present disclosure. Therefore, although the present disclosure has been described in detail through the above embodiments, the present disclosure is not limited to the above embodiments. Without departing from the concept of the present disclosure, it can also include more other equivalent embodiments, and the scope of the present disclosure is determined by the scope of the appended claims.

### INDUSTRIAL APPLICABILITY

In the method for detecting hole position information provided in the present disclosure, photometric stereo scan data may be obtained through detection in the photometric stereo scanning mode, which may include subtle changes on the surface of an object and has the effects of enhancing the contrast between different feature points and reducing noise. Therefore, based on the photometric stereo scan data and non-photometric stereo scan data, hole position information with higher accuracy may be obtained, ultimately meeting the requirements of high-precision industrial automation detection.

## Claims

1. A method for detecting hole position information, comprising:
acquiring first scan data and second scan data of a structure to be detected during scanning the structure to be detected using a three-dimensional scanner, wherein the first scan data is photometric stereo scan data of positioning holes on the structure to be detected, and the second scan data comprises non-photometric stereo scan data of the positioning holes, or the second scan data is non-photometric stereo scan data of feature points other than the positioning holes;
determining hole position information of the positioning holes based on the first scan data and the second scan data.

2. The method according to claim 1, prior to acquiring the first scan data and the second scan data of the structure to be detected, the method further comprises:
in the case that the positioning holes of the structure to be detected is detected by the three-dimensional scanner scans, controlling the three-dimensional scanner to collect the first scan data and the second scan data in a target scanning state based on pre-determined movement information.

3. The method according to claim 1, wherein the second scan data is non-photometric stereo scan data of the positioning holes;
determining the hole position information of the positioning holes based on the first scan data and the second scan data comprises:
correcting the second scan data based on the first scan data, and determining the hole position information of the positioning holes.

4. The method according to claim 3, wherein correcting the second scan data based on the first scan data and determining the hole position information of the positioning holes comprises:
acquiring first scan data and second scan data corresponding to any current feature point on the positioning holes;
based on the first scan data corresponding to the current feature point, removing abnormal data from the second scan data corresponding to the current feature point until abnormal data in the second scan data corresponding to all feature point on the positioning holes are removed, thereby obtaining second scan data with all abnormal data removed;
acquiring hole center position and diameter of the positioning holes from the second scan data with all abnormal data removed, and determining the hole center position and the diameter as the hole position information of the positioning holes.

5. The method according to claim 1, wherein the second scanning data comprises non-photometric stereo scan data of feature points other than the positioning holes;
determining the hole position information of the positioning holes based on the first scanning data and the second scanning data comprises:
obtaining stitched scanning data by stitching the first scanning data and the second scanning data based on coordinate data of each feature point on the structure to be detected;
acquiring hole center position and diameter of the positioning holes from the stitched scan data, and determining the hole center position and the diameter as the hole position information of the positioning holes.

6. The method according to claim 1, wherein lens of the camera on the three-dimensional scanner is surrounded by a plurality of ring lights; each ring light and the lens of the camera are unobstructed; in the case that any one of the plurality of ring lights is turned on, the brightness of the lit ring light is greater than or equal to a preset brightness threshold, and wavelength of light emitted by the lit ring light is equal to wavelength of a filter in front of the lens of the camera.

7. The method according to claim 6, wherein the plurality of ring lights are sequentially turned on according to a preset lighting sequence and a preset interval time to enable the three-dimensional scanner scanning the positioning holes on the structure to be detected in a photometric stereo scanning mode to obtain photometric stereo scanning data of the positioning holes.

8. An apparatus for detecting hole position information, comprising:
a data acquisition module, configured to acquire first scan data and second scan data of a structure to be detected during scanning the structure to be detected using a three-dimensional scanner, wherein the first scan data is photometric stereo scan data of positioning holes on the structure to be detected, and the second scan data comprises non-photometric stereo scan data of the positioning holes, or the second scan data is non-photometric stereo scan data of feature points other than the positioning holes;
a hole position detection module, configured to determine hole position information of the positioning holes based on the first scan data and the second scan data.

9. An electronic device, comprising:
a processor;
a memory for storing executable instructions;
wherein the processor is configured to read the executable instructions from the memory and execute the executable instructions to perform the method according to any one of claims 1-7.

10. A computer-readable storage medium, storing a computer program, wherein the storage medium medium stores the computer program, and when the computer program is executed by a processor, the processor is enabled to perform the method according to any one of claims 1-7.
